# EUROPEAN PATENT APPLICATION

(11) **EP 4 578 523 A1**
(43) Date of publication of application: **02.07.2025**
(21) Application number: 23220598.9
(22) Date of filing: 28.12.2023
(51) Int. Cl.: A63F 13/67, A63F 13/5375, A63F 13/79, A63F 13/87, H04L 51/02

(54) **A SYSTEM AND METHOD FOR FACILITATING INTERACTION WITH A USER OF A COMPUTERIZED GAME**

(71) Applicant: Playtech Software Limited, London WC1V 6EA (GB)
(72) Inventor: EFRAT, Ido, 1404 Sofia (BG)
(74) Representative: Beck Greener LLP

(57) **Abstract**

A computer-implemented method for facilitating interaction with a user of a computerized game is provided. The method includes obtaining data indicative of an event generated in response to a user's action in relation to the game of a user, using an Artificial Intelligence (AI) bot engine to obtain a respective system action based on the obtained data, wherein the AI bot engine is trained to provide respective system actions to user's actions, and performing the system action. Optionally, an avatar is configured for performing the system actions.

## Description

### TECHNICAL FIELD

The presently disclosed subject matter relates to computerized gaming systems and interaction with users of computerized games, and more particularly to facilitating such interaction with users.

### BACKGROUND

An online gaming system offers a platform where users can access various games. Each game comes with its specific set of rules that users need to be familiar with. Furthermore, participating in these games might entail additional guidelines, both legal and financial, based on the specific game, the user's location, or other factors influencing the gaming system's operation. While playing, users might encounter issues and require assistance from an operator during their gaming sessions. Skilled human professionals are essential to support diverse games with different rules and legal requirements. Moreover, these games allow a large number of players to participate simultaneously, necessitating the establishment of dedicated chatrooms with individual professionals for individual player assistance.

Managing a skilled team of experts who are well-versed in game rules and IT issues is crucial due to the unique nature of player problems. These professionals should have access to players' account information. Also, given the complexity of gaming systems, involving various entities such as game licensees, operators, server hosts, and platform operators managing multiple games, and the nature of the communication which is intensive and requires round-the-clock assistance, providing immediate user support and efficiently resolving encountered problems is desired.

Although digitalized bots are now prevalent on websites via chatrooms, allowing users to interact with a digitalized bot, these bots rely on predefined question trees, offering limited interaction with the users. Also, these bots are invoked only upon a user's initiation.

Therefore, it is desired to enhance players' experiences by providing more personalized and engaging interactions during their gaming sessions, and a more efficient resolution of problems.

### GENERAL DESCRIPTION

Online games, when played on players' devices, facilitate communication with the players. This communication is particularly useful when players face challenges or problems during the game, have inquiries about the game rules, or encounter other issues. Certain games provide a chatroom feature for players involved in the game. When a player encounters a problem, the player can type the question or issue in the chat, and sometimes the question or issue can be addressed within the chatroom. Alternatively, the player may initiate a one-on-one chat with a human assistant and pose the question there. If the human assistant cannot resolve the problem, the issue remains unresolved. In other instances, players may seek answers through a chat with a predefined digital assistant that operates based on a structured tree of problems and solutions, hoping that their specific issue aligns with the options available in the tree.

Therefore, there are instances where users' issues remain unresolved, and their questions go unanswered, leading to a disappointing user experience. In some cases, users have to wait in queues until they can reach a human assistant to resolve their problems. Additionally, managing a team of human assistants necessitates a significant amount of both human and computerized resources, especially when users are waiting in line, increasing load on the computerized system.

It is desired to enhance players' interaction (referred to here and below as "users") during a game, aiding them in swift problem resolution, offering personalized and customized assistance, and thereby enhancing user engagement.

Therefore, in some cases, according to the presently disclosed subject matter, there is provided a computer-implemented method for facilitating interaction with a user of a computerized game. The method may obtain data on events that are generated during the game and may implement an Artificial Intelligence (Al) bot engine that can communicate with a user, assist in solving problems, and communicate on other issues with the user, to enhance his engagement. The output of the Al bot engine may be formed as an avatar, configured for communicating with the user. The avatar may communicate with the user, perform certain actions in the computerized gaming system which pertain to the user, the user's account, or the user's profile, and initiate communication with inactive users, for example, when the user watches a stream of a game, but does not place a bet. In some cases, the Al bot can replace a live dealer when the game involves a computerized game involving a live studio, or when a live dealer moderates the computerized game. The user may continue and communicate with the avatar to resolve the issue, or to raise other issues.

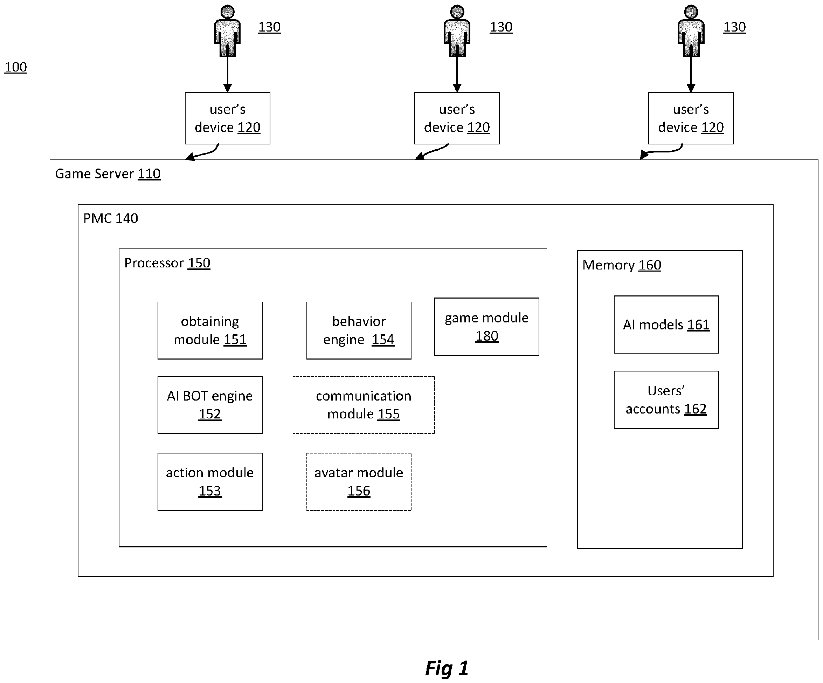

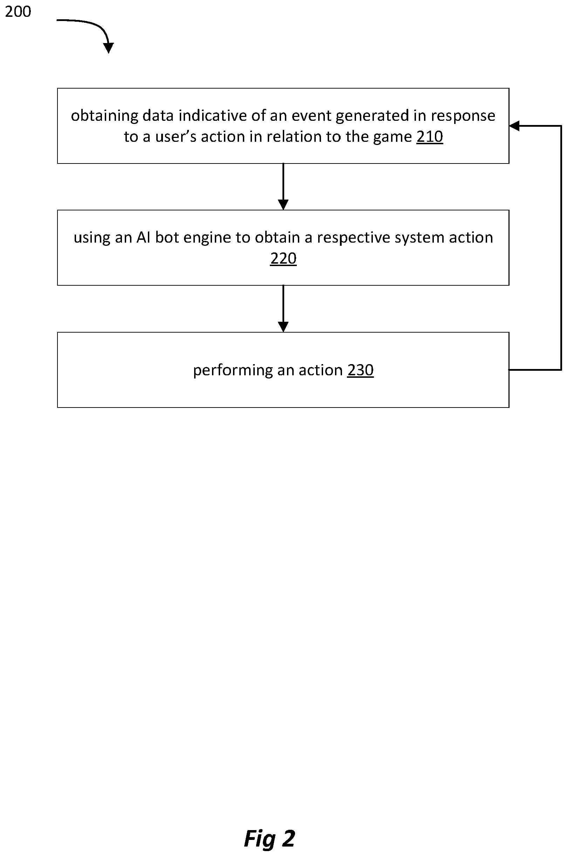

Using an Al bot, such as AI bot engine **152** illustrated further below with respect to Figs. **1** and **2****,** to replace a human assistant, is advantageous, as the Al bot reduces manpower required to support, in real time the numerous amounts of users around the world, in various countries, in an online gaming environment such as online gaming environment **100.** An Al bot is configured to provide support for services which are consumed around the clock. Also, an Al bot may provide more efficient support and resolve issues of the users more quickly.

In addition, using an Al bot engine to communicate with users has many advantages. For example, the Al bot may enhance engaging live casino experience and personalize customer service to users, without the limitations of human live casino dealers. Since the Al bot is trained to provide system actions corresponding to user's actions, the communication is more precise and efficient, while reducing load resources for users waiting with issues which remain unresolved. Using an Al bot and optionally formatting the Al bot as an avatar creates engagement and entertainment by messaging and voicing with the users. The Al bot can respond to customers and solve customer requests, questions, problems, and, optionally, can proactively resolve customer complaints by accessing customer experience pain points history and survey logs. In cases where the AI bot has access to the user's account, communication with the user can be based on personal history of the user in the games, creating personalized experience for the players. Moreover, the Al bot can access customer data, profiles, and accounts in Backoffice systems, and take actions in the accounts upon request or upon demand, in accordance with operating procedures, for example, to sign up to new services or features in games, change account details and authorization etc. It should also be noted that the Al bot can follow standard operating procedures based on regulation requirements of the individual players' profile (e.g., location, age etc.) providing high level services to the users. Among additional advantages of using the Al bot is the ability to provide services to an unlimited number of game users, optionally, live, in a personalized way. Training the Al bot on game rules, and possible user's actions and respective system actions, contributes to the accuracy and efficiency with which the services are provided, thereby shortening each session with the user encountering problems, while reducing load and memory resources of the gaming system.

Further to the above, forming the Al bot as an avatar involves additional advantages, notably the ability to speak to customers in the relevant language by automatic recognition of language, dialect, accent types, etc. Al bots can provide services in more than **60** languages with different pronunciations, genders, ethnicities, and tones of voice. The personalized customer services in this respect enhance users' engagement.

In some examples of the presently disclosed subject matter, communication with the user is performed in a direct communication channel with the user, instead of assisting in a public chatroom with many users activating on the chatroom. Establishing a direct communication channel with users enhances the preservation of their privacy.

For purpose of illustration only, the following description is provided for a game server hosting a game and having capabilities to provide Al bot assistant services in the manner described below. However, those skilled in the art will readily appreciate that the teachings of the presently disclosed subject matter are, likewise, applicable to an independent gaming server configured to communicate with game servers hosting games, where the independent gaming server has capabilities to provide Al bot assistant services for any game hosted by a game server. Moreover, as illustrated below, the Al bot is configured to provide assistant services also in the field of safe gambling. Hence, the AI bot may be used as a complementary product to 'Safer Gambling' products and to gaming services, thus forming a unique and novel component in a gaming architecture, having various advantages, among which is the ability to complement other gaming products.

The Al bot represents a significant technical advancement over traditional human-operated support systems, offering superior efficiency, scalability, and user engagement. It embodies a novel approach to customer support within the gaming industry, setting a new standard for interactive gaming experiences. Below are examples of some technical advantages of the Al bot according to certain embodiments of the presently disclosed subject matter over traditional human-operated support systems:
**Reduction in System Load:** the Al bot is designed to handle simultaneous inquiries, significantly reducing the need for separate execution threads, otherwise necessary for human operators. An architecture enabling to use the Al bot may streamline user support and minimize server load, leading to more efficient utilization of processing power and memory resources.
**Computation and Memory Resource Savings:** the Al bot may conduct user interactions using state-of-the-art machine learning models with minimal computational overhead. These models are optimized for rapid data retrieval and decision-making, which conservatively uses memory resources compared to manual data access a human operator would require.
**Continuous Availability:** The Al bot operates **24/7** without downtime, starkly contrasting to human operators, who require breaks and work in shifts. This ensures that user assistance is always at hand, addressing issues instantaneously and improving overall user satisfaction.
**Scalability:** As the user base grows (currently approximately half a million visitors daily), the Al bot can scale its services without a corresponding increase in resource allocation. Human operator scalability, in contrast, is linear and resource-intensive.
**Multilingual Communication:** Unlike human operators limited by their linguistic capabilities, the Al bot can interact in over **60** languages, including various dialects and accents. This is achieved through advanced natural language processing techniques, allowing for a more inclusive and globally accessible gaming experience.
**Personalized User Experience:** Utilizing data analytics, the Al bot may customize interactions based on user behavior and preferences, a level of personalization that human operators cannot achieve when dealing with thousands of users.
**Precision and Compliance:** the AI bot adheres to regulations with unwavering accuracy, ensuring consistent compliance with legal requirements across jurisdictions, a task subject to human error when performed manually.
**Real-Time Data Processing:** The Al bot's real-time capability to process and analyse data allows for dynamic responses to user queries based on the latest available data, facilitating an adaptive and intelligent user support system.
**Efficient Multitasking:** Due to robust integration with back-office systems, the Al bot can perform various tasks simultaneously, such as updating account details or signing up users for new services, much more efficiently than a human operator managing one task at a time.
**Predictive Assistance:** Harnessing the power of predictive analytics, the Al bot can preempt user issues before they surface by identifying and acting on patterns in user behavior and game interactions.

According to a first aspect of the presently disclosed subject matter, there is provided a computer-implemented method for facilitating interaction with a user of a computerized game, comprising:
obtaining data indicative of an event generated in response to a user's action in relation to the game;
using an Artificial Intelligence (Al) bot engine to obtain a respective system action based on the obtained data, wherein the Al bot engine is trained to provide respective system actions to user's actions; and
performing the system action.

In addition to the above features, the computer-implemented method according to this aspect of the presently disclosed subject matter can optionally comprise in some examples one or more of features (i) to (xi) below, in any technically possible combination or permutation:
i. Wherein the event is generated in response to receiving an input from the user.
ii. Wherein the input is received through a chatroom during a game session.
iii. Wherein performing the system action comprises:
   establishing a direct communication channel with the user; and
   performing the system action in the direct communication channel.
iv. Wherein the user is a first user of a plurality of users of the computerized game adding content via a shared chatroom during the game session, and wherein, in response to receiving the input from the first user in the shared chatroom, establishing the direct communication channel with the first user and performing the system action in the direct communication channel.
v. Wherein obtaining the data comprises receiving a behavioral indication from a behavior analysis engine configured for analysing an activity of users during game sessions.
vi. Wherein performing the system action comprises proactively engaging the user.
vii. The method further comprises:
   in response to performing the system action, receiving data indicative of an additional event generated in the game in response to a user's action.
viii. The method further comprises:
   accessing a stored user's account; and
   modifying one or more details in the account.
ix. The method further comprises:
   enabling reoccurring communication with the user by repeatedly obtaining data indicative of events generated in the game, using the Al bot engine to provide respective system actions, and performing the respective system actions.
x. Wherein prior to performing the system action, the method further comprises:
   configuring an avatar to perform the system action; and
   performing the system action using the configured avatar.
xi. The method further comprises:
   enabling reoccurring communication of the configured avatar with the user by repeatedly obtaining data indicative of events generated in the game, using the Al bot engine to provide respective system actions, and performing the respective system actions using the configured avatar.

The presently disclosed subject matter further comprises a computer game server for facilitating interaction with a user of a computerized game. The server comprises a processing circuitry comprising at least one processor and computer memory, the processing circuitry being configured to execute a method as described above with reference to the first aspect, and may optionally further comprise one or more of the features (i) to (xi) listed above, mutatis mutandis, in any technically possible combination or permutation.

The presently disclosed subject matter further comprises a non-transitory computer readable storage medium tangibly embodying a program of instructions that, when executed by a computer, cause the computer to perform a method as described above with reference the first aspect, and may optionally further comprise one or more of the features (i) to (xi) listed above, mutatis mutandis, in any technically possible combination or permutation.

### BRIEF DESCRIPTION OF THE DRAWINGS

In order to understand the invention and to see how it can be carried out in practice, embodiments will be described, by way of non-limiting examples, with reference to the accompanying drawings, in which:
**Fig. 1** illustrates a functional block diagram of a game server **110** operating in a computerized gaming environment **100,** in accordance with certain embodiments of the presently disclosed subject matter; and
**Fig. 2** illustrates a generalized flow chart **200** of operations executed in the game server **110,** in accordance with certain embodiments of the presently disclosed subject matter.

### DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components, and circuits have not been described in detail so as not to obscure the presently disclosed subject matter.

Unless specifically stated otherwise, as apparent from the following discussions, it is appreciated that throughout the specification discussions utilizing terms such as "processing", "obtaining", "using", "performing", "establishing", "generating", "transmitting", "receiving", "sending", "analysing", "engaging", "accessing", "modifying", "configuring", "performing", "enabling", "updating" or the like, refer to the action(s) and/or process(es) of a computer that manipulate and/or transform data into other data, said data represented as physical, such as electronic quantities, and/or said data representing the physical objects. The term "computer" should be expansively construed to cover any kind of hardware-based electronic device with data processing capabilities including a personal computer, a server, a computing system, a communication device, a processor or processing unit (e.g. digital signal processor (DSP), a microcontroller, a microprocessor, a field programmable gate array (FPGA), an application specific integrated circuit (ASIC), etc.), and any other electronic computing device, including, by way of non-limiting example, computerized systems or devices such as a game server **110,** a user device **120,** PMC **140,** disclosed in the present application.

The terms "non-transitory memory" and "non-transitory storage medium" used herein should be expansively construed to cover any volatile or non-volatile computer memory suitable to the presently disclosed subject matter.

The operations in accordance with the teachings herein may be performed by a computer specially constructed for the desired purposes, or by a general-purpose computer specially configured for the desired purpose by a computer program stored in a non-transitory computer-readable storage medium.

Embodiments of the presently disclosed subject matter are not described with reference to any particular programming language. It will be appreciated that a variety of programming languages may be used to implement the teachings of the presently disclosed subject matter as described herein.

Usage of conditional language, such as "may", "might", or variants thereof, should be construed as conveying that one or more examples of the subject matter may include, while one or more other examples of the subject matter may not necessarily include, certain methods, procedures, components, and features. Thus, such conditional language is not generally intended to imply that a particular described method, procedure, component, or circuit is necessarily included in all examples of the subject matter. Moreover, the usage of non-conditional language does not necessarily imply that a particular described method, procedure, component, or circuit, is necessarily included in all examples of the subject matter. Also, reference in the specification to "one case", "some cases", "other cases", or variants thereof, means that a particular feature, structure, or characteristic described in connection with the embodiment(s), is included in at least one embodiment of the presently disclosed subject matter. Thus, the appearance of the phrase "one case", "some cases", "other cases", or variants thereof, does not necessarily refer to the same embodiment(s).

It is appreciated that certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable subcombination.

Bearing this in mind, attention is drawn to **Fig. 1** illustrating a functional block diagram of a game server **110** operating in a computerized gaming environment **100.** The computerized gaming environment **100** comprises several components configured for operatively communicating with each other, including the game server **110** and one or more users' devices **120,** each operated by a user **130.** The user **130** can send a request through user's device **120** e.g., through running a dedicated game application, to participate in a game. For example, the user **130** can request to participate in a roulette game, optionally a live roulette game. The game can be hosted and executed by game server **110** or by another server communicating with the game server **110.** Irrespective of whether the game is executed by the game server **110** or not, communication from the user, including the request of the user to participate in the game, can be sent to the game server **110.** Game server **110** is configured to receive data pertaining to the participation of the user **130** in the game and actions performed by the user during a game session, either directly from components executing the game in game server **110,** or since the game server received the data from another server executing the game. As explained further below, the game server **110** is configured for facilitating interaction with the user of the game.

Optionally, the computerized gaming environment can include additional components (not shown) configured to operatively communicate with the game server **110** and/or the users' devices **120,** which provide services to the users, such as one or more e-Wallet applications associated with users **130.** The e-Wallet applications enable users **130** to manage financial transactions relating to executed games, e.g., placing bets in a game. The e-Wallet applications operatively communicate with game server **110,** and, when necessary, game server **110** is configured to communicate with e-Wallet applications to receive a grant for an action of the user, or to communicate data relating to financial transactions based on the user's activity in the executed game. The computerized gaming environment can also include external memory storing data pertaining to the users' accounts, such as users' profiles, personal details, history, and such.

In some cases, game server **110** includes a processor and memory circuitry (PMC) **140** comprising a processor **150** and a memory **160.** The processor **150** is configured to execute several functional modules in accordance with computer-readable instructions implemented on a non-transitory computer-readable storage medium. Such functional modules are referred to hereinafter as comprised in the processor **150.** The processor **150** can comprise an obtaining module **151,** an Al bot engine **152,** an action module **153,** a behavior engine **154,** a communication module **155,** an avatar module **156,** and a game module **180.** The memory **160** can comprise Al models **161** and Users' accounts **162.**

The processor **150,** e.g., using the game module **180,** is configured to execute one or more games, while generating typical game functionality and math, such as a typical roulette game or another game functionality. Optionally, the game is a live game.

During running of a session of game and while executing the game, game events are generated. In some examples, following a user's action in relation to a game, such as logging in, placing a new bet, and sending a request to exit the game, corresponding game events are generated. In some cases, obtaining module **151** is configured to obtain data indicative of one or more events during a game session. Based on the data that the obtaining module **151** obtains, the Al bot engine **152** can be used to obtain a respective system action. The Al bot engine **152** is configured to use one or more models stored in Al models **161** in memory **160** trained to provide respective system actions to user's actions to obtain the respective system action. The action module **153** is then configured to perform one or more of the respective system actions that are obtained. To illustrate the above, consider an example that the user **130** asks a question in the chatroom operated in the game. The chatroom can include all or some of the users currently participating in the live game. The user may text in the chatroom: "why can't I place a bet higher than 5 Euro?". The question invokes a game event, data of which may be received by the obtaining module **151.** The obtaining module **151** may use the Al bot engine **152** to obtain a respective system action to the user's question, in this example, to generate a response, such as "account limitations". Once a response is obtained, action module **153** is configured to perform the response, for example to add to the chatroom a text including the response.

In some examples, one or more of the models stored in Al models **161** in memory **160** are trained to provide respective system actions to user's actions to obtain the respective system action. The models may be trained using a comprehensive dataset that includes a historical set of questions and answers, user interaction logs, game session analytics, and feedback from customer support interactions. The training data may encompass direct user inputs and behavioral data, such as click patterns, navigation paths within the gaming platform, and user engagement metrics with different games. The training data may also integrate data from external modules such as behavioral modules, which may provide insights into user gambling behavior. The Al model may be trained to recognize patterns that might indicate risky behavior, and then to provide a suitable action.

In some examples, processor **150** can enable reoccurring communication with the user **130.** In such examples, in a repetitive manner, data of new events is obtained, processed by the Al bot engine **152** and respective system actions are performed by the action module **153.** Any action of the user **130** received in response to a system action, is further processed to obtain a suitable system action. In the above example, the user may further ask if the definitions of the account may be modified. The input of the user may further be processed by the Al bot engine **152** to obtain a respective system action, such as a negative or positive response. The action module **153** can perform the system action, e.g., in case of a positive response, the action module **153** can access the user's account and modify one or more details.

In such cases, the user **130** can engage and communicate with the gaming system using the communication module **155.** It should be noted that the chatroom receiving text is merely one known example of how to receive a user's input, and those skilled in the art would realize that the subject matter applies also to other known methods for receiving the user's input, such as voice input, where the user **130** is having a voice conversation using a microphone in the user's device **120** and the system actions, including communications, can likewise be voiced back by the communication module **155.**

In some examples, alternatively or additionally, the action module **153,** e.g., using communication module **155,** is configured to establish a direct communication channel with the user **130** who entered the question, e.g., to open a private chatroom with the user **130** separated from the public chatroom, and reply to the user **130** in the private chatroom.

In some examples, the Al bot engine **152** and/or action module **153** may access users' accounts **162** to obtain data pertaining to the user's account. For example, if the user **130** action pertains to restrictions or subscription type issues, the Al bot engine **152** can access the user's account and provide a system response based also on the user's account details. For example, if the user **130** was limited in the past, AI bot engine can provide a response based on the account status. Following some communication with the user **130,** the action module **153** can access the user's account and modify one or more details in the user's account as a resolving system action.

In some examples, the user's action in relation to a game can be an invocation of a trigger by the behavior engine **154.** As explained further below, the behavior engine **154** can monitor the user's activity throughout a game or several games, and may trigger a game event when the user's activity exceeds a predefined threshold. For example, if the user is behaving in a manner that triggers a predefined compulsive gambling behavior event, then the obtaining module **151** is configured to obtain data indicative of that event. The data can be processed by the Al bot engine **152** to obtain a respective system action. For example, the system action can limit the user's action in the game, once performed.

In some examples, once action module **153** obtains a system action, the system action can be transmitted to avatar module **156** configured for configuring an avatar to perform the system action. In the above example of a chatroom, instead of or in addition to adding text in the chatroom as a response, the avatar module **156** can display an avatar character on the user's device **120** that is configured to voice the response.

In some examples, the components in processor **150** including the obtaining module **151,** the action module **153,** the Al bot engine **152,** and the avatar module **156,** are configured to repeat the process of obtaining game events, using the Al bot engine **152** to provide respective system actions and performing respective system actions using the configured avatar, and to enable reoccurring communication of the user **130** with the configured avatar. Using the avatar for reoccurring communication with the user **130** and performing suitable system actions is advantageous as the communication with the user **130** is both efficient and provides better user experience in addressing problems or other issues during a game session.

It should be noted that although the description refers to the game server **110** as executing the game, this should not be considered as limiting, and those skilled in the art will readily appreciate that the teachings of the presently disclosed subject matter are, likewise, applicable to a plurality of game servers, where one of the game servers is an executing server that hosts and executes the game itself, while the game server **110** communicates with the executing server and provides services to the executing server that facilitates interaction with the user **130** in the manner described above.

It should also be noted that the teachings of the presently disclosed subject matter are not bound by the game server **110** described with reference to **Fig. 1****.** Equivalent and/or modified functionality can be consolidated or divided in another manner and can be implemented by any appropriate combination of software with firmware and/or hardware and executed on a suitable device. Those skilled in the art will also readily appreciate that data repositories, such as Memory **160,** can be consolidated or divided in other manner; databases can be shared with other systems or be provided by other systems, including third party equipment.

Reference is now made to **Fig. 2** illustrating a generalized flow chart **200** of operations executed in the game server **110** implementing a computer-implemented method for facilitating interaction with a user of a computerized game, in accordance with certain embodiments of the presently disclosed subject matter. The following flowchart operations are described with reference to elements of game server **110** and entities operated in computerized gaming environment **100** illustrated in Fig. 1. However, this is by no means binding, and the operations can be performed by elements other than those described herein.

The user **130** can send a request through user's device **120** e.g., through running a dedicated game application, to participate in a game, for example, in a roulette game. Optionally, the game is a live roulette game. The game can be hosted and executed by game server **110** or by another hosting game server communicating with the game server **110.** During a game session, game server **110** can generate game events, e.g., using game module **180,** if the game is hosted and executed by the game server **180.** In cases where the game is executed by another hosting game server, the game server **110** can receive data indicative of game events that were generated by the hosting game server.

In some cases, the process in flowchart **200** initiates, by the obtaining module **151** in game server **110,** obtaining data indicative of an event generated in response to a user's action in relation to the game (block **210).**

A game session may refer to a running period of a game in which the user **130** initiated an engagement with a game, or a game in which the user is participating. However, the game session period should be interpreted in a broad manner to include any time that the user **130** is exposed to a game or a platform of games. For example, a game session includes the time that the user **130** is watching a stream of a game but has not yet initiated his participation, and has not yet placed a bet. A game session can also include the time between two executions of rounds, a certain time period after the user has finalized his actual game session, and the like.

To illustrate broad interpretation of a game session, in some examples, the Al bot engine **152** may further be configured to help the user **130** when "viewing" the portfolio of games and exhibiting difficulty in selecting a particular game. The Al bot engine **152** may engage with the user **130** to provide him with personalized game recommendations, detailed information about the games, and interactive prompts to facilitate the selection process. The Al bot's capabilities may use advanced algorithms to analyse user preferences, past interactions, and real-time behavior to tailor suggestions and enhance the user's experience within the game platform.

Game events can be generated during game sessions. Some examples of game events include a start of a new round, result available, end of a round, and errors that occur. In some examples, at least some of the events are generated in the game in response to a user's action. Some examples of events generated in response to a user's action include receiving a new bet of the user **130,** auto-play started, win or loss of the user **130** in a game round, etc. A game event can be generated in response to a lack of user's action (which is interpreted as a user action to wait), such as if the user watches a stream of a game, but does not place a bet.

In order to obtain data indicative of events generated in a game, the obtaining module **151** can receive from the game module **180,** or receive from a game module of a hosting game server, data indicative of an event generated in response to a user's action in relation to a game. For example, obtaining module **151** can receive data indicative of a game event generated in response to the user's request to participate in a roulette game, or data indicative of the user's **130** attempts to execute a game he selected from a plurality of games displayed to him, or data indicative that the user **130** initiated a game session, watches a game stream, but did not place a bet for a certain period of time which exceeds a predefined threshold. Other examples of game events for which obtaining module **151** can receive data indicative thereof are: the user **130** views games on a gaming platform, but does not select any game to participate, the user **130** selected a game but the game is not running, such that data is not transmitted to and from the user's device, the user **130** selected a game, but does not participate and does not place any bets, or if the user **130** sticks to one game or genre, etc.

A chatroom may be operated by a game operator in a game or by an operator of a platform of games, using known techniques. The chatroom may be public and may allow several users **130** currently playing in one or more related games to participate in the chat by adding text. Alternatively, or additionally, a link to a direct chatroom may be available for users. Pressing the link may initiate a direct chatroom with a human assistant and the user **130** can communicate with the human assistant. In some examples of the presently disclosed subject matter, the communication module **155** can operate a public chat and enable users **130** to add comments and questions in the chatroom. A user **130** may ask a question in the chatroom during a game session such as "why can't I place a **5** Euro bet?" or ask a question why a certain function is not operable. As described, in known systems, the questions may or may not be answered by other players participating the game, or, if a human assistant is available and is part of the chatroom, he can assist the user **130.** According to the presently disclosed subject matter, in some examples, when the user **130** poses a new issue by inputting data into the chatroom, such as a question or a comment, or by initiating an ad hoc chatroom with a human assistant, an event may be generated, and data of the event can be sent to obtaining module **151,** as described above with respect to block **210.**

Other examples of data indicative of events generated in the game include receiving data indicative of a user's behavior activity. A game server hosting a game may use a behavior analysis engine, such as behavior engine **154,** configured for analysing an activity of users during game sessions. One reason for implementing a behavior analysis engine is to detect behavior of users that is potentially risky, as when a user degenerates into compulsive gambling behavior which may lead to gambling addiction. For example, behavior engine **154** can analyse the betting patterns of the user **130** in a game session or along several game sessions for a period of time and identify behavior patterns and tendencies. For example, behavior engine **154** can detect that a user significantly raises the stakes in each game, while doing so disproportionately and abruptly. Other examples may relate to the activity hours of the users, or to the frequency of their activity. For example, behavior engine **154** may detect patterns indicating prolonged gaming sessions without breaks, or may identify signs of distress or negative gaming behavior.

In some examples, where a certain pattern of activity is indicative such that measures of this activity exceed a certain threshold, an intervention may be required from the gaming system. To illustrate such examples, assume that behavior engine **154** analyses the betting patterns of the user **130** in several game sessions during a certain period, and detects that the user **130** increases the frequency of gaming activity significantly in the recent week, while raises the stakes simultaneously from one game to the next one. The behavior engine **154** may also identify pieces of personal information of the user **130** that are similar to pieces of personal information of other gambling addicts. When the behavior engine **154** determines that a certain intervention is required from the gaming system, then the behavior engine **154** may generate a suitable game event including a behavioral indication. One example of implementation of a behavior engine **154** is described in patent application published on January 3, 2019 under number US 2019/0005844**.** However, this described implementation of should not be considered as limiting, and those skilled in the art will readily appreciate that the teachings of the presently disclosed subject matter are, likewise, applicable to any behavior module configured for monitoring a user's behavior during games, and generating indications about potentially risky behavior, such that the user degenerates into compulsive gambling behavior which may lead to gambling addiction. In some examples of the presently disclosed subject matter, the behavioral indication game event may be received by the obtaining module **151.**

To continue with the stages illustrated in Fig. **2****,** in some cases, the obtaining module **151** can obtain data on an event generated in response to a user's action. Based on the data, an Artificial Intelligence (Al) bot engine such as Al bot engine **152,** can be used to obtain a respective system action (block **220).** The Al bot engine **152** is configured to use one or more models stored in AI models **161** in memory **160** for obtaining the respective system action. The Al bot engine **152** may be trained to provide respective system actions to user's actions. As a diversity of actions can be taken by users, the Al Bot engine **152** may be trained to provide different system actions to each of the diverse actions performed by the users, tailored to the specific type of a user action. As such, the Al bot engine **152** may be trained to provide a first type of system action when the game event is generated in response to a user inputting a question in a chatroom, and another, second, type of a system action in response to game event based on data received from the behavior engine **154.**

In some examples, the Al bot engine **152** may combine live data form the running game and one or more models, trained on historical information. The Al bot engine **152** may apply the current rules of the running game and a general set of platform-wide rules to obtain a suitable response including contextually relevant assistance, and to ensure compliance with the latest game mechanics and regulations. The Al bot engine **152** may access real-time data streams for dynamic game events, user account status, and in-game actions to provide immediate and accurate suitable system actions.

In some examples, the Al models may also be updated based on the live data feed, allowing the models to adapt to new gaming scenarios and user behaviors that may not have been present in the training data.

For example, if the user **130** asks a question in a chatroom pertaining to one of the game's rules in a particular game, such as a question pertaining a number of cards in a particular game, the Al bot engine **152** may be trained to assist in answering the question of the user **130** based on the rules of the game, or based on a standard set of rules of games.

Traditionally, each particular game has a set of instructions and rules pertaining to participating in the particular game. In addition, gaming systems may have general guidelines and rules in participating platforms of games, such that they relate to different subscriptions to the platform, general regulatory requirements, and other procedures that effect one's participation in a game. Historic data, including user's questions and possible answers, answered based on these instructions, rules, and guidelines, may be used to train an Al model to provide a respective system action to a user action. If an answer to a question is not found in the particular game's instructions, then an answer may be given based on a general pre-defined set of questions and answers, where the answers rely on general rules of platforms of games. In the example of the user **130** asking about the number of cards in a particular game, the answer may be provided based on training of the AI models **161** that was made based on the instructions of the game, and historic and prepared data including possible questions and answers pertaining to the rules of the game. One of the advantages of training an Al bot engine **152** to reply to user's questions is that while the training is not made with respect to each and every possible rule in the game and possible type of game, the trained Al bot engine **152** is configured, in real time, to provide an accurate response to a user's question, even if the type of the game is a new type or if the game is a new game, and the Al bot engine **152** has not been trained on the instructions of that new game. In real time, the Al bot engine **152** may access a particular set of rules, and generate a response based on the particular set of rules. If the Al bot engine **152** cannot generate a response based on the set of rules, the engine can access pre-defined general rules of games, and generate a response based on the general rules. This facilitates flexibility and scalability of a platform of games, enabling to expend and support a variety of games, having different rules, in an efficient manner.

The Al bot engine **152** may further be trained to pro-actively engage with the user **130,** and, as such, can obtain a respective system action to a user's action which requires engagement with the user. As defined above, a user's action, for which events are generated, includes all actions performed by the user, from the moment he has access to a game, while the user is watching a stream of a game, before and during the running of the game, and even after a game, or between the running of two games. Assuming an example where the user **130** is watching a stream of a game, the user **130** has enough balance in his account, but is not betting. The non-betting action may cause generation of an event to which the Al bot engine **152** may provide a system response. The Al bot engine **152** may be trained to provide respective system actions of proactive engagement system actions. For example, the respective system action can include facilitating the interaction with the user **130** by initiating communication with the user **130** while posing engaging questions to the user **130.** Another example is when the user **130** sticks to one game or genre, the Al B bot engine **152** may be trained to facilitate exploration or encouragement of the user **130** by highlighting features or interesting aspects of other games to encourage exploration within the game portfolio.

The AI bot engine **152** may further be trained to provide system actions to user's actions indicative of actions that are potentially risky, as when a user degenerates into compulsive gambling behavior which may lead to gambling addiction. The behavior engine **154** may track the user's actions, such as tracking the number and frequency of the user's bets, and may determine that the user's actions are indicative of potentially being risky, for example, in cases where the value of parameters for evaluating the user's action exceed a pre-defined threshold. The determination of the behavior engine **154** may involve the generation of a respective game event. The trained Al bot engine **152** may provide a respective system action to such user's actions. Following is a non-limiting list of examples of suitable system actions that may be obtained by the Al bot engine **152:** communication with the user **130,** performing one or more actions in the gaming system such as restricting the user's gambling actions, or applying responsible gambling policies. In cases where the behavior engine **154** detect patterns indicating prolonged gaming sessions without breaks, the Al bot engine **152** may be used to obtain a respective system action relating to game breaks and health reminders, such as communicating the user **130** a request to rest, or messages highlighting the importance of breaks for mental and physical health.

In cases where the behavior engine **154** identifies signs of distress or negative gaming behavior, the Al bot engine **152** may be used to obtain a respective system action relating to crisis intervention, such as offering the user **130** direct links to support services or in-house counselling options.

In some cases, action module **153** may perform the system action obtained by the Al bot engine **152** (block **230),** for example, in case the user **130** is one user of a plurality of users of the computerized game, and the user **130** needs assistance and adds content via a shared chatroom during the game, such as adding a question in the public chatroom. In response to receiving the user's question and obtaining a respective system action from the Al bot engine **152,** the action module **153** may add the response in the chatroom. In some examples, the action module **153,** using communication module **155,** may establish a direct communication channel such as a private chatroom with the user **130** who posed the question and perform the system action by replying to the question in the direct communication channel. Further reoccurring communications with the user **130** can be continued in the private chatroom. In known systems, a direct chatroom with a user is available only with a human assistant. Establishing a direct communication channel with the user **130** instead of performing the system action in the public chatroom is advantageous as open issues of the user **130** may be resolved more efficiently with the Al bot engine **152** while keeping privacy of the user **130** in the direct communication channel instead of in the public chatroom.

In cases where the Al bot engine **152** obtains suitable system actions of proactive engagement with the user **130,** the action module **153** may initiate communication with the user **130.** For example, in case the user **130** is watching a stream of a game, the user **130** has enough balance in his account, but is not betting, the respective system action obtained from the Al bot engine **152** may be communicating with the user **130,** optionally, with optional engagement sentences. The action module **153** can transmit a message to the user's device **120** or can display on the screen a message of the optional engagement sentences. Alternatively, the action module **153** can initiate a direct communication chat with the user **130** in a similar manner to that described above. The purpose of communicating with the user **130** is to enhance engagement with the user **130,** to assist with problems which the user might be encountering, and to ease the operation of the user **130** with the gaming system. In the above example, a chat can be opened with the user **130** with a question: "why are you not participating in the game?". The user **130** may reply e.g., in the chat, with: "I don't know the rules of the game". The answer of the user **130** may generate a new event in the gaming system. Data of the new event can be sent to the Al bot engine **152** which obtains a suitable system action to the user's input. For example, the Al bot engine **152** can obtain a system action of providing the rules of the game to the user **130,** and the action module **153** may display in the chat a link to stored rules of the game, or a stored video illustrating the rules, or ask the user **130** if he wants a short summary of the rules to be provided to him, or an illustration of a first round of a game.

In some examples, there are multiple users **130** participating in a single game, operating a public shared chatroom, where each of the users can add content into the chatroom and ask questions, or post other comments. In such cases, in response to receiving an input from a particular user **130,** referred to also as a first user, the advanced communication with the user **130** and performing any system actions can continue via a direct communication channel established with the particular user **130,** and not in the public shared chatroom, e.g., to maintain privacy of the user **130.** In such cases, in response to receiving the user's input in the public shared chatroom, and after a respective system action is obtained by the Al bot engine **152,** the action module **153** can establish the direct communication channel with the particular user **130** and perform the system action in the direct communication channel. Communication in the public shared chatroom with the plurality of users can continue in parallel to the direct communication channel with the particular user **130.**

Establishment of direct communication with the user **130** is advantageous for several reasons. While in known systems, the chatroom is public and is available for all participants, establishing direct communication with the user **130** according to certain embodiments of the presently disclosed subject matter increases privacy of the user **130** in the digital media, as the chat is not transparent to other players participating in the game. In cases where the response includes details of the subscription account of the particular user **130,** it is advisable that the chat is private with the user **130,** instead of a public one. Also, due to the establishment of the private chatroom, the Al bot engine **152** can be trained to also provide system actions that involve personal details of user **130** such that relate to personal details of the user, e.g., his age, gender, etc., or to the user's subscription details. For example, the Al bot engine **152** can be trained to provide also system actions that pertain to restrictions posed on the user's activity due to previous risky behavior indicators that were received by the gaming system. Also, reduced system resources are required as the communication is not broadcast to all participants, but only to the particular user **130.**

In some examples, the resolution of communication with the user can involve modification of user account settings, implementation of user-requested changes, and providing personalized gaming advice. For example, if the user **130** encounters problems, which result from a particular subscription he has, and following communication with the user **130** he permits to change the subscription to a different one, then the action module **153** can access the user's account stored in users' accounts **162** and modify one or more details in the account. Modifying the details of an account can include changing subscription type, adding/removing authorization to users related with the account, signing up to new services, etc. The user account data may also be utilized, personalizing the user experience. For example, if the user enters a question in the chatroom triggering an event, the Al bot engine can access the user details and the respective system action can include personalized recommendation of games, providing of customized assistance, and, optionally, adjusting game settings based on user profiles, preferences, and historical interactions.

It should be noted that the user's account may be stored in a remote data repository. Thus, in such cases, the action module **153** can access the user's account and modify the details by communicating instructions to the remote data repository.

In cases where the game events are generated with respect to risky behavior of the user **130** and the system actions obtained by the Al BOT engine **152** pertain to system actions to deal with the risky behavior, then the action module **153** can execute one or more of the system actions. Optionally, the Al bot engine **152** may use account data to enforce responsible gaming measures, such as setting limits or providing self-exclusion options if risky behavior is detected. For example, if the required system action is applying some restrictions on the user's activity or account, then the action module **153** can execute the restrictions and change permissions pertaining to the user's account in users' accounts **162** stored in memory **130.** Alternatively, or additionally, the action module **153** can initiate communication with the user, optionally, in a direct chatroom, and offer the user **130** a coffee voucher so the user **130** would leave for a break, thus performing a reality check to the user **130** to remind the user **130** of how long he has been playing and how much money he has spent. This can help the user **130** to stay aware of his gambling habits and to make informed decisions about his play.

Also, in some examples, the Al bot engine **152** may follow pre-defined communication scripts and may integrate, in a dynamic manner, pre-defined scripts and Al-generated responses operating a dual-response mechanism. The AI bot engine **152** may utilize pre-defined scripts for standard inquiries and known scenarios, ensuring consistency in responses and adherence to regulatory and operational guidelines. These scripts are a foundation for the Al bot's interactions, providing reliable answers to frequently asked questions and common user requests. In parallel, the Al bot engine **152** may be equipped with advanced Al algorithms capable of generating dynamic responses in real-time. These responses are based on current game rules, user behavior, historical interaction data, and contextual understanding gained from ongoing user engagement. The Al-generated responses are designed to handle complex, unique, or new user inquiries that fall outside the scope of pre-defined scripts. Hence, in some examples, when user's action is received, the Al bot engine **152** may first check against an associated repository of pre-defined scripts, e.g., stored in Memory **160** (not shown). A corresponding scripted response may be deployed if the input matches a known pattern or query. In case the user input is more complex or does not match any script, the Al bot engine **152** may process the input using the trained models. The Al bot engine **152** may consider the current context within the game, the user's historical data, and any pertinent real-time information to generate an appropriate response. As explained above, the Al bot engine **152** response may also involve modifying user account details, initiating proactive engagements, or providing personalized game recommendations. The Al bot engine **152** may be designed to seamlessly switch between using pre-defined scripts and generating AI responses, thus achieving an advantage of ensuring that the user receives the most appropriate, accurate, and helpful information. The integration in a dynamic manner of pre-defined scripts and Al-generated responses operating a dual-response mechanism is also advantageous, as this mechanism allows the Al bot engine **152** to cover a broad spectrum of user interactions, ranging from routine tasks to complex problem-solving scenarios. By combining the reliability of scripts with the flexibility of Al-generated responses, the Al bot engine **152** may ensure high-quality user interactions that are consistent and adaptable to a wide range of user needs and situations.

Optionally, throughout this process, the Al bot engine **152** continuously learns from new interactions, further refining its response generation capabilities and improving its repository of scripts and models.

In some examples, it is advantageous to use visual effects such as avatars for performing the system actions and executing system actions including communication with the user **130.** In some cases, the action module **153** can execute the system actions using the avatar module **156.** Based on the system actions, the avatar module **156** can configure an avatar character, e.g., by determining visual parameters pertaining to the form of the avatar such as its shape, determining if the character is human/non-human, voice, size, formed as an animal, color, gender, etc. The configured avatar character can be displayed on the screen of the user's device **120** and can perform the system actions. For example, if the system action includes communicating with the user **130,** then the avatar can communicate with the user **130** by voicing the response. The avatar can also be configured by the user **130** by determining one or more of the visual parameters pertaining to the form of the avatar. Performing the system actions by an avatar involves additional advantages to those listed above, by the ability to speak to customers in the relevant language by automatic recognition of language, dialect, accent types etc. Personalized and customized assistance, and communicating with a visual character, enhance the user engagement.

In a similar manner to that described above, the process can be repetitive, where reoccurring communication is sent and received between the PMC **150** and the user **130.** The repetitive process can establish a conversation with the user **130.** To facilitate such reoccurring communications, any input of the user **130** that is received after a system action has been performed by the avatar, is further processed by the Al bot engine **152** as a new game event that was generated, and the Al bot engine **152** can obtain another respective system action to the generated event. The additional respective system action may then be performed by the configured avatar, and may be provided to the user **130.**

Using avatars to perform system actions, and, in particular, to establish reoccurring communication with the user **130,** is advantageous. In addition to the advantages of using Al bot engine **152** to enhance engagement with the user, as described above, using avatars to communicate with the user **130** further enhances engagement and smooth interaction with the user **130.** While using Al bot engines **152** may provide a more efficient and faster resolution of problems and open issues with the user **130,** using an avatar to perform the respective system actions increases the personalization assistant that the user **130** obtains from the gaming system. Configuring the avatar increases visual and audio personalization assistance, as opposed to known systems, which use a pre-defined questions tree for proposing pre-defined solutions to the user **130,** while such appear as text in a textbox dialog with the user **130.**

It is noted that, as is well known in the art, systems operating in real time may experience some delay between the onset of a command and its execution, due to various reasons such as processing time and/or network communication delay. The term real time as used herein is meant to include near real-time i.e., operation in systems that may experience some internal delays.

It is also noted that the teachings of the presently disclosed subject matter are not bound by the flow chart illustrated in **Fig. 2****,** and that the illustrated operations can occur out of the illustrated order.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

Those skilled in the art will readily appreciate that various modifications and changes can be applied to the embodiments of the invention as hereinbefore described without departing from its scope, defined in and by the appended claims.

## Claims

1. A computer-implemented method for facilitating interaction with a user of a computerized game, the method comprising:
obtaining data indicative of an event generated in response to a user's action in relation to the game;
using an Artificial Intelligence (Al) bot engine to obtain a respective system action based on the obtained data, wherein the Al bot engine is trained to provide respective system actions to user's actions; and
performing the system action.

2. The method of claim **1,** wherein the event is generated in response to receiving an input from the user.

3. The method of claim **2,** wherein the input is received through a chatroom during a game session.

4. The method of claim **3,** wherein performing the system action comprises:
establishing a direct communication channel with the user; and
performing the system action in the direct communication channel.

5. The method of claim **4,** wherein the user is a first user of a plurality of users of the computerized game, adding content via a shared chatroom during the game session, and wherein, in response to receiving the input from the first user in the shared chatroom, establishing the direct communication channel with the first user and performing the system action in the direct communication channel.

6. The method of claim **1,** wherein obtaining the data comprises receiving a behavioral indication from a behavior analysis engine configured for analysing an activity of users during game sessions.

7. The method of claim **1,** wherein performing the system action comprises proactively engaging the user.

8. The method of claim **1,** the method further comprising:
in response to performing the system action, receiving data indicative of an additional event generated in the game in response to a user's action.

9. The method of claim **1,** the method further comprising:
accessing stored user's account; and
modifying one or more details in the account.

10. The method of claim **1,** further comprising:
enabling reoccurring communication with the user by repeatedly obtaining data indicative of events generated in the game, using the Al bot engine to provide respective system actions, and performing the respective system actions.

11. The method of claim **1,** wherein using the Al bot engine to obtain a respective system action further comprises integrating, in a dynamic manner, pre-defined scripts and Al-generated responses.

12. The method of claim **1,** wherein prior to performing the system action, the method further comprises:
configuring an avatar to perform the system action; and
performing the system action using the configured avatar.

13. The method of claim **12,** further comprising:
enabling reoccurring communication of the configured avatar with the user by repeatedly obtaining data indicative of events generated in the game, using the Al bot engine to provide respective system actions, and performing the respective system actions using the configured avatar.

14. A computer game server for facilitating interaction with a user of a computerized game, the server comprising a processing circuitry comprising at least one processer and computer memory, the processing circuitry being configured to execute the method as defined by any one of claims **1** to **13.**

15. A non-transitory computer readable storage medium tangibly embodying a program of instructions that, when executed by a computer, cause the computer to perform a method for facilitating interaction with a user of a computerized game, as defined by any one of claims **1** to **13.**
